# EUROPÄISCHE PATENTANMELDUNG

(11) **EP 0 671 251 A1**
(43) Veröffentlichungstag der Anmeldung: **13.09.1995**
(21) Anmeldenummer: 95102867.9
(22) Anmeldetag: 01.03.1995
(51) Int. Cl.: B29C 45/16

(54) **Spritzgussverfahren und Vorrichtung zur Durchführung des Verfahrens**

(30) Priorität: 08.03.1994 CH 678/94
(71) Anmelder: FOBOHA GmbH, D-77716 Haslach (DE)
(72) Erfinder: Bodmer, Werner, D-77716 Haslach (DE); Armbruster, Rainer, D-77709 Wolfach (DE)
(74) Vertreter: Frei, Alexandra Sarah

(57) **Zusammenfassung**

Gemäss dem erfindungsgemässen Spritzgussverfahren werden entstehende Spritzlinge beispielsweise in bewegbaren Formenteilen, die auf einem Drehtisch angeordnet sind, durch Drehung des Drehtisches nicht nur an verschiedene Spritzstationen (S.1, S.2) zum Spritzen mehrerer Materialien (M.1, M.2) geführt, sondern auch an weitere Stationen (K, A), an denen weitere Schritte ausgeführt werden. Diese weiteren Schritte können beispielsweise Kühlschritte, Besprühschritte oder Deformationsschritte sein. Insbesondere vorteilhaft ist ein Ausstossschritt, wobei auf einer Ausstossstation (A) im wesentlichen simultan mit dem Spritzen fertige Spritzlinge (P) ausgestossen oder abgesaugt werden.

## Beschreibung

Die Erfindung liegt auf dem Gebiete des Spritzgiessens und betrifft ein Spritzgussverfahren nach dem Oberbegriff des ersten unabhängigen Patentanspruchs und eine Vorrichtung nach dem Oberbegriff des entsprechenden unabhängigen Patentanspruchs zur Durchführung des Verfahrens.

Spritzgussverfahren beruhen darauf, thermoplastisches Material, beispielsweise Kunststoffe, Thermoplasten auf natürlicher Basis oder Metalle, durch Erwärmung in einen flüssigen oder plastischen Zustand zu bringen, das Material in eine geschlossene Spritzform zu Spritzen, es in der Spritzform genügend erstarren zu lassen, die Spritzform zu öffnen und den entstandenen Spritzling aus der Form auszustossen oder abzusaugen. Bevor ein nächster Spritzvorgang gestartet werden kann, muss gegebenenfalls das Ausstosswerkzeug in seine Ruheposition zurückbewegt und die Spritzform wieder geschlossen werden. Üblicherweise werden simultan miteinander in einem Formnest mehrere Spritzlinge hergestellt. Die Länge eines Taktes, also die Zeit, die benötigt wird, um einen Spritzling oder die in einem Formnest entstehende Gruppe von Spritzlingen fertigzustellen, ist bestimmt durch die Summe der notwendigen Zeiten für Formschliessen, Spritzen, Abkühlen, Formöffnen und Ausstossen.

Nach neueren Entwicklungen werden auch Spritzlinge aus mehreren Materialien, insbesondere aus Kunststoffmaterialien, gespritzt, beispielsweise aus zwei Materialien, wobei der aus dem ersten Material hergestellte Vorspritzling beim Spritzen des zweiten Materials wenigstens teilweise als Spritzform dient, derart, dass der Vorspritzling vom zweiten Material übergossen und/oder umgossen wird. Es entstehen dadurch Spritzlinge aus zwei Materialien, die je nach Zustand beim Aufeinandertreffen durch eine Fliessnaht miteinander verbunden sind oder diskret aneinander grenzen. In derselben Art und Weise werden auch Spritzlinge aus mehr als zwei Materialien gespritzt, wobei in aufeinanderfolgenden Spritzvorgängen üblicherweise je ein Material gespritzt wird.

Für ein derartiges Multi-Materialien-Spritzgussverfahren mit beispielsweise zwei Materialien sind analog zum oben beschriebenen Ein-Material-Verfahren die folgenden Schritte notwendig: Vorpritzling mit erstem Material in Vorspritzform spritzen - abkühlen lassen - Vorspritzform öffnen - Vorspritzling in Spritzform positionieren oder Vorspritzform zu Spritzform verändern - Spritzform schliessen - zweites Material in Spritzform spritzen - abkühlen lassen - Spritzform öffnen - Spritzling ausstossen - Ausstosswerkzeuge repositionieren, gegebenenfalls Spritzform zu Vorspritzform verändern und Vorspritzform schliessen. Es ist offensichtlich, dass ein derartiges Verfahren gegenüber dem Ein-Material-Spritzgussverfahren sehr viel aufwendiger ist, was sich direkt auch auf den zeitlichen Aufwand für die Herstellung der Spritzlinge auswirkt.

Aus vorrichtungstechnischen Erwägungen ist es sinnvoll, die für die zwei Materialien notwendigen zwei Spritzdüsen stationär zu halten und den Vorspritzling vorteilhafterweise mit der Spritzform oder wenigstens einem Teil der Spritzform zwischen den einzelnen Spritzschritten von der einen Spritzdüse zur anderen zu bewegen. Dies führt üblicherweise zu Spritzformen, die aus einem bewegbaren Teil und einem stationären Teil bestehen. Dabei ist der stationäre Teil der Vorspritzform beispielsweise mit der Spritzdüse für das erste Material fest verbunden, der stationäre Teil der Spritzform ist mit der Spritzdüse für das zweite Material fest verbunden. Der bewegbare Teil der Spritzform ist vom stationären Teil der Vorspritzform zum stationären Teil der Spritzform und zurück bewegbar, wobei er in der einen Richtung der Bewegung den Vorspritzling mittransportiert. Unterscheidet sich die Form des Vorspritzlings auch auf der Seite des bewegbaren Teils der Spritzform von der Form des Spritzlings, muss der bewegbare Formenteil derart ausgestaltet sein, dass durch zusätzlich bewegbare oder ersetzbare Teile seine Form veränderbar ist.

Um den oben erwähnten zeitlichen Aufwand für die Herstellung der Spritzlinge zu verkürzen, ist es ebenfalls üblich, für die Durchführung eines Zwei-Materialien-Spritzgussverfahrens mit der oben beschriebenen Anordnung zwei identische, bewegbare Formenteile einander gegenüberliegend auf einem Drehtisch anzuordnen, derart, dass die Position des einen bewegbaren Formenteiles der Position des stationären Teiles der Vorspritzform entspricht, während der andere bewegbare Teil der Position des stationären Teils der Spritzform entspricht. Der Drehtisch bewegt sich dann einerseits taktweise um je 180° und andererseits in jedem Takt zum Schliessen der Spritzformen gegen den stationären Teil und zum Öffnen wieder davon weg. Mit einer derartigen Vorrichtung verläuft ein Takt eines Zwei-Materialien-Spritzgussverfahrens folgendermassen: Drehtisch (mit einem Vorspritzling) um 180° drehen - bewegbaren Formenteil für Vorspritzling bzw. Spritzling einrichten - Spritzformen schliessen - erstes bzw. zweites Material Spritzen - Vorspritzling bzw. Spritzling abkühlen lassen - Spritzformen öffnen - Spritzling ausstossen.

Die für die Produktion eines Spritzlings oder einer in einem Formnest hergestellten Gruppe von Spritzlingen benötigte Zeit entspricht der Summe der notwendigen Zeiten für die angeführten in einem Takt auszuführenden Schritte, wobei bei den parallel durchgeführten Schritten die längere notwendige Zeit relevant ist.

Gemäss dem Stande der Technik werden entsprechend für die Herstellung von Spritzlingen aus n Materialien n bewegbare Formenteile (Einzelform oder Formnest) verwendet, die üblicherweise auf einem Drehtisch um 360°/n voneinander beabstandet angeordnet sind. Pro Takt bewegt sich der Drehtisch um einen Winkel von 360°/n, wobei in jedem Takt alle Materialien im wesentlichen synchron gespritzt werden.

Es zeigt sich nun, dass die für einen Takt notwendige Zeit in der Kalkulation des Herstellungspreises von Spritzlingen eine sehr gewichtige Grösse darstellt. Aus diesem Grunde wäre es sehr wünschbar, diese Taktzeit weiter zu verkürzen.

Die Erfindung stellt sich also die Aufgabe, die Taktzeit für Spritzgussverfahren zu verkürzen, das heisst, sie stellt sich die Aufgabe, ein Verfahren aufzuzeigen und eine Vorrichtung zu schaffen, mit denen ohne wesentliche Erhöhung der Investitionsleistung in der gleichen Zeit mehr Spritzlinge produziert werden können.

Diese Aufgabe wird gelöst durch das Verfahren und die Vorrichtung, wie sie in den Patentansprüchen definiert sind.

Die Grundidee der Erfindung beruht darauf, nicht nur wie gemäss dem Stande der Technik die Spritzvorgänge für die verschiedenen Materialien simultan durchzuführen, sondern weitere Vorgänge, insbesondere das Ausstossen, vorteilhafterweise aber auch das Abkühlen oder weitere für das Verfahren notwendige Schritte. Es sind dann in einem allgemeinen Spritzverfahren mit n Materialien nicht mehr n bewegbare Formenteile im Einsatz, sondern mindestens n + 1, allgemein n + x wobei x eine ganze Zahl ist, die grösser ist als eins oder gleich eins. Sind die bewegbaren Formenteile auf einem Drehtisch angeordnet, ergibt sich für den Drehtisch eine Drehung pro Takt um 360°/n+x. Auf der stationären Seite der Vorrichtung sind neben n stationären Formenteilen und den n Spritzdüsen an den zusätzlichen x Stationen dem dort durchgeführten Arbeitsschritt entsprechende Werkzeuge vorzusehen.

Im Zusammenhang mit den folgenden Figuren wird nun anhand von beispielhaften Verfahrensvarianten und einer beispielhaften Ausführungsform für eine Vorrichtung zur Durchführung des Verfahrens die Erfindung detailliert beschrieben. Die Erfindung ist aber in keiner Weise auf die beschriebenen Beispiele beschränkt. Sie bezieht sich, wie bereits eingangs erwähnt, auf Spritzgussverfahren im allgemeinen mit einem einzigen Material oder mit einer beliebigen Anzahl von nacheinander zu einem Spritzling gegossenen Materialien oder Materialgruppen. Von den Figuren zeigen:
- **Figur 1**: das Schema einer beispielhaften Variante des erfindungsgemässen Verfahrens (Zwei-Materialien-Spritzguss);
- **Figur 2**: das Schema einer weiteren beispielhaften Variante des erfindungsgemässen Verfahrens (Drei-Materialien-Spritzguss);
- **Figur 3**: das Schema einer weiteren beispielhaften Variante des erfindungsgemässen Verfahrens (Ein-Material-Spritzguss);
- **Figur 4**: einen Blick auf einen Drehtisch für eine Verfahrensvariante nach dem Schema der Figur 1;
- **Figur 5**: eine schematische Ansicht einer beispielhaften Ausführungsform der erfindungsgemässen Vorrichtung;
- **Figur 6**: Schnitte durch beispielhafte stationäre und bewegbare Formenteile für die Verfahrensvariante gemäss Figur 1.

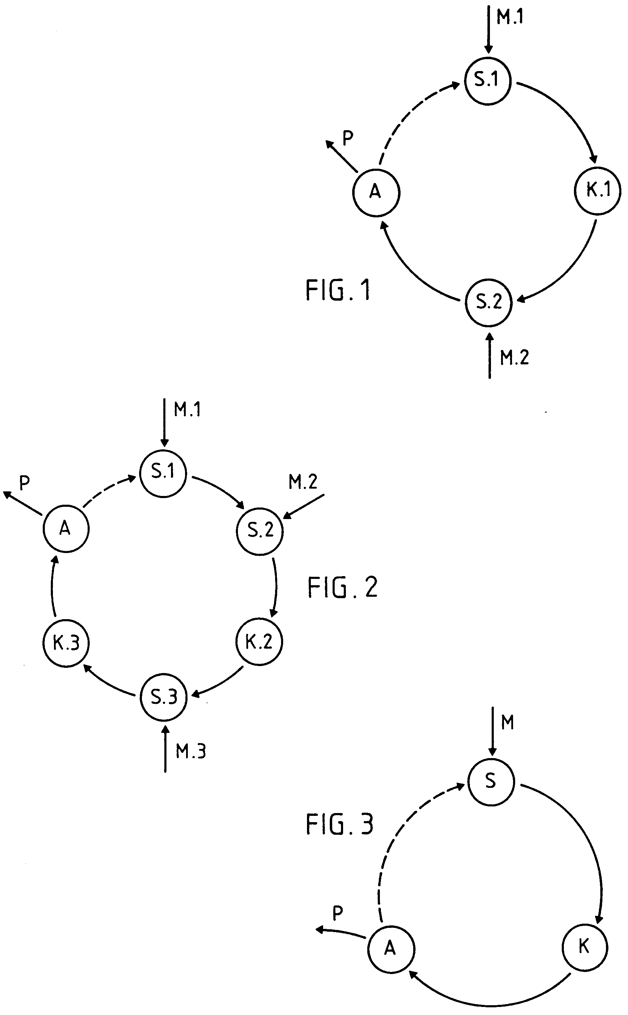

**Figur 1** zeigt ein Schema für eine beispielhafte Variante des erfindungsgemässen Verfahrens das die folgenden in separaten Stationen an einem Spritzling nacheinander durchgeführten Schritte umfasst: S.1: Spritzen eines Vorspritzlings aus einem ersten Material M.1; K.1: Kühlen des Vorspritzlings; S.2 Spritzen des Spritzlings durch Über- und/oder Umspritzen des Vorspritzlings mit einem zweiten Material M.2; A: Ausstossen des fertigen Spritzlings P.

Die Taktzeit für das in der Figur 1 dargestellte Verfahren entspricht der gesamten Zeit, die notwendig ist, um die bewegbaren Formenteile mit den entstehenden Spritzlingen von einer Station zur jeweils nächsten zu bewegen, um die Spritzformen zu schliessen, um dasjenige Material zu spritzen, dessen Spritzen länger dauert, und um die Spritzformen wieder zu öffnen; oder sie entspricht der Zeit, die notwendig ist, um den Vorspritzling abzukühlen, wenn diese länger ist als die erstgenannte Zeit. Sollte das Ausstossen derjenige Schritt sein, der am längsten dauert, entspricht die Taktzeit der Ausstosszeit.

Gegenüber einem Zwei-Materialien-Verfahren gemäss dem Stande der Technik wird für das in der Figur 1 dargestellte Verfahren die Taktzeit um diejenige Zeit kürzer, die für das Abkühlen des Vorspritzlings und für das Ausstossen des Spritzlings notwendig ist.

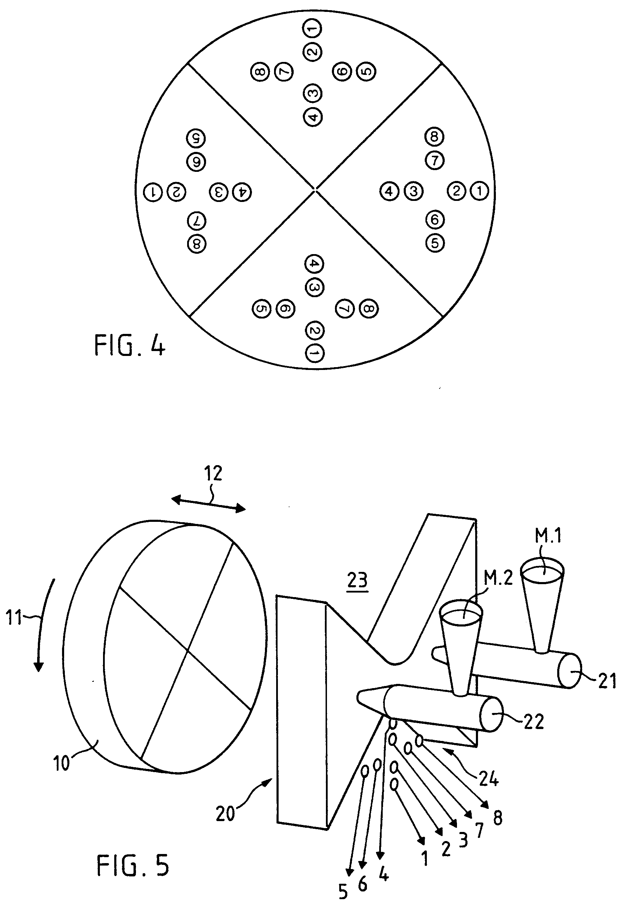

Das Ausstossen muss nicht wie gemäss dem Stande der Technik zwischen zwei aufeinanderfolgenden Spritzvorgängen durchgeführt werden, da es simultan zum Spritzen durchgeführt wird und dafür eine ganze Taktzeit zur Verfügung steht. Dies setzt aber voraus, dass die Werkzeuge derart ausgerüstet sind, dass bei mindestens in den Spritzstationen geschlossenen Spritzformen ausgestossen werden kann, was im Zusammenhang mit der Figur 5 noch detaillierter beschrieben werden soll.

Anstelle des auf einer separaten Station und simultan mit den Spritzvorgängen durchgeführten Abkühlschritts K.1 oder zusätzlich dazu können andere Schritte und/oder weitere Kühlschritte vorgesehen sein. Beispielsweise kann der Vorspritzling zur Verhinderung einer starken Verbindung zwischen den zwei Materialien oder zur Verstärkung dieser Verbindung wenigstens auf denjenigen Oberflächenbereichen, die mit dem zweiten Material überspritzt werden sollen, mit entsprechenden Mitteln besprüht werden. Der Vorspritzling oder der Spritzling können in einer derartigen zusätzlichen Station auch für eine Verformung oder für eine Veränderung der Materialstruktur mechanisch bearbeitet werden. Beispielsweise können Anformungen des noch plastisch verformbaren Vorspritzlings durch Draufdrücken an ihren Enden verdickt und derart zu Nietköpfen verformt werden, die nachher mit dem zweiten Material umgossen werden und eine Formschlussverbindung zwischen den zwei Materialien herstellen. Derartige Nietköpfe können anders nur mit Hilfe von komplizierten Schiebersystemen in den Spritzformen hergestellt werden, eine Technik, die bedeutend aufwendiger ist. An Spritzlingen oder Vorspritzlingen können auch durch Anwendung von mechanischem Druck die Makromoleküle in einen Zustand höherer Ausrichtung gebracht werden, wodurch die mechanischen Eigenschaften des Materials an den behandelten Stellen verändert werden. Dies kann beispielsweise bei der Herstellung von Filmscharnieren vorteilhaft sein.

Die obigen Beispiele für Verarbeitungsschritte, die in zusätzlichen Stationen zu den Spritzstationen durchgeführt werden können, schliessen deren Liste in keiner Weise ab.

Es ist vorteilhaft, die zusätzlichen Schritte derart zu konzipieren, dass die Taktzeit schlussendlich derjenigen Zeit entspricht, die notwendig ist, um die Spritzformen zu schliessen, zu spritzen und die Spritzformen wieder zu öffnen, dadurch dass die zusätzlich notwendigen Schritte gegebenenfalls derart in an separaten Stationen durchgeführte Teilschritte aufgeteilt werden, dass keiner der Teilschritte eine längere Taktzeit benötigt als die Spritzzeit.

Die beiden Materialien M.1 und M.2 können verschiedene Materialien sein oder aber auch dasselbe Material. Wird dasselbe Material in zwei Schritten gespritzt mit beispielsweise einem Abkühlschritt dazwischen, können relativ dickwandige Spritzlinge mit trotzdem sehr kurzen Taktzeiten produziert werden.

Für bestimmte Spritzlinge ist es beispielsweise zur Herstellung einer Warmfliessnaht notwendig, zwei oder auch mehrere Materialien, also eine Gruppe von Materialien simultan in dieselbe Form zu spritzen. Auch ein derartiger Spritzvorgang ist in dem beschriebenen Verfahren integrierbar, indem an einer Spritzstation (oder an mehreren) zwei oder mehrere Spritzdüsen angeordnet werden, mit denen simultan in dieselbe Sporitzform gespritzt wird.

**Figur 2** zeigt eine weitere, beispielhafte Verfahrensvariante für ein Drei-Materialien-Spritzgussverfahren, in dem eine separate Kühlung des aus bereits zwei Materialien bestehenden Vorspritzlings und eine separate Kühlung des fertigen Spritzlings vor dem Ausstossen vorgesehen sind. Auch in dieser Verfahrensvariante sind anstelle der zwischen oder nach den Spritzschritten S.1, S.2 und S.3 vorgesehenen Schritte K.2 und K.3 oder zusätzlich dazu andere und weitere Schritte in der bereits beschriebenen Art denkbar.

**Figur 3** zeigt eine weitere, beispielhafte Verfahrensvariante, in der ein Spritzling in nur einem Spritzschritt aus nur einem Material oder aus einer Gruppe von simultan gespritzten Materialien hergestellt wird. Der Spritzling wird vor dem Ausstossen abgekühlt. Trotzdem entspricht die Taktzeit nur der Zeit, die notwendig ist, um den Spritzling zu spritzen und ihn soweit abzukühlen, dass die Spritzform geöffnet werden kann, ohne den Spritzling zu beschädigen.

In den Figuren 1 bis 3 sind die einzelnen Schritte des erfindungsgemässen Spritzgussverfahrens jeweils auf einer Kreislinie dargestellt. Die für die Durchführung des erfindungsgemässen Verfahrens notwendigen, bewegbaren Spritzformenteile können in der dadurch angedeuteten Art effektiv auf einer Kreislinie, das heisst beispielsweise auf einem Drehtisch, bewegt werden, sodass der Weg vom Ausstossschritt A zum ersten Spritzschritt S.1, auf dem kein Spritzling mitgeführt wird, den Kreis schliesst (in den Figuren gestrichelt dargestellt). Es ist aber keine Bedingung des erfindungsgemässen Verfahrens, dass die beweglichen Spritzformen sich auf einer Kreislinie bewegen. Die Spritzstationen und die zusätzlichen Stationen müssen lediglich auf einer Linie angeordnet sein, derart, dass die bewegbaren Formenteile nacheinander zu den Stationen bewegt werden können. Der Weg zwischen Ausstossstation A und erster Spritzstation S.1 ist irrelevant, solange er von jedem bewegbaren Spritzformteil in mindestens der Zeit zurückgelegt werden kann, die sovielen Taktzeiten entspricht, wie sich bewegbare Formenteile auf diesem Weg befinden.

**Figur 4** zeigt einen Blick auf einen Drehtisch mit vier Formnestern, wie er beispielsweise für die Durchführung des Verfahrens gemäss Figur 1 eingesetzt wird. Pro Takt werden mit Hilfe dieses Drehtisches acht Spritzlinge hergestellt. Diese acht Spritzlinge sind einander gleich oder mindestens derart ähnlich, dass die zu ihrer Herstellung notwendigen Schritte und die darin anzuwendenden Parameter sich möglichst ähnlich sind.

**Figur 5** zeigt von der Zuführungsseite der Spritzmaterialien gesehen in einer schematischen, perspektivischen Darstellung eine beispielhafte Ausführungsform der gesamten erfindungsgemässen Vorrichtung für die Durchführung des Verfahrens gemäss Figur 1 mit einem Drehtisch 10 gemäss Figur 4, der mit vertikaler Tischfläche angeordnet ist, und einem stationären Werkzeug 20. Der Drehtisch ist derart mit Antrieben (nicht dargestellt) wirkverbunden, dass die darauf angeordneten, mit dem Tisch bewegbaren Formenteile von einer Station des stationären Werkzeuges 20 zur jeweils nächsten bewegt werden können (Pfeil 11) und dass er sich zum Schliessen der Spritzformen gegen das stationäre Werkzeug bewegen kann und zum Öffnen der Formen sich vom stationären Werkzeug entfernen kann (Doppelpfeil 12).

Am stationären Werkzeug 20 sind entsprechend den Formnester-Positionen des Drehtisches 10 einander gegenüberliegend die beiden Zuführungen 21 und 22 für die beiden Materialien M.1 und M.2 angeordnet, dazwischen sind übereinander Lücken 23 und 24 vorgesehen. Die bewegbaren Formenteile des Drehtisches befinden sich in einer der Lücke 23 entsprechenden Position für den Schritt (K.1, Figur 1) zur Kühlung der Vorspritzlinge, wofür die bewegbaren Formenteile unbedeckt bleiben. Selbstverständlich können in der Lücke 23 entsprechend dem in dieser Position durchzuführenden Schritt auch Werkzeuge (Sprühdüse, Düse für Kühlluft, Deformationswerkzeug etc.) angeordnet sein.

Die bewegbaren Formenteile des Drehtisches befinden sich in einer der Lücke 24 entsprechenden Position für das Ausstossen. Weisen die bewegbaren Formenteile Ausstossmittel auf, fallen die fertigen Spritzlinge bei geschlossener Vorrichtung (Drehtisch auf stationäres Werkzeug gepresst) aus der Lücke 24. Weisen die bewegbaren Formenteile keine Ausstossmittel auf, können die Spritzlinge durch einen in der Lücke 24 stationär angeordneten Saugkanal abgesaugt werden.

Sind die im Formnest hergestellten Spritzlinge nicht alle gleich, ist es vorteilhaft, diese durch separate Kanäle 1 bis 8 auszustossen oder abzusaugen und gleichzeitig zu sortieren, wie dies in der Figur sehr schematisch angedeutet ist. Dazu sind die Mündungen der Kanäle am stationären Werkzeug derart angeordnet, dass beim Schliessen der Vorrichtung je ein bewegbarer Formenteil mit einem Spritzling an eine Kanalmündung geführt wird.

**Figur 5** zeigt noch als detailliertes Beispiel Spritzformen, die eingesetzt werden können, um in einem Verfahren gemäss Figur 1 beispielsweise Verschlusseinheiten, wie sie in den Europäischen Veröffentlichungen EP-A1-0546991, EP-A1-0548010, EP-A1-546999 beschrieben sind, herzustellen. Die vier untereinander angeordneten Zeilen der Figur zeigen die Bewegungen der einzelnen Formenteile in den für die vier Schritte S.1, K.1, S.2 und A des Verfahrens notwendigen vier Stationen. Die in der Figur dargestellten Spritzformen bestehen jeweils aus einem von Station zu Station bewegbaren Formenteil 30 und in denjenigen Stationen (S.1, S.2), in denen ein solcher gebraucht wird, einem stationären Formenteil 40 bzw. 50.

Der stationäre Formenteil 40 für den ersten Spritzschritt S.1 besteht aus einem Hauptteil 41 mit einer Spritzdüse 42 und aus zwei Schiebern 43 und 44. Der bewegbare Formenteil 30 besteht aus einem Zentralteil 31 und Peripherieteilen 32 und 33, wobei Zentralteil und Peripherieteile relativ zueinander verschiebbar sind. Die Spritzform wird geschlossen, indem der bewegbare Formenteil 30 gegen den stationären Formenteil 40 bewegt und darauf gepresst wird. Gleichzeitig werden die Schieber 43 und 44 in ihre Spritzposition gebracht. Dann wird durch die Spritzdüse 42 das Material M.1 in den Hohlraum zwischen den beiden Formenteilen 30 und 40 gespritzt, wodurch der Vorspritzling 60 entsteht. Sobald der Vorspritzling soweit abgekühlt ist, dass die Spritzform geöffnet werden kann, werden die Schieber 43 und 44 in ihre Ruheposition bewegt und wird der bewegbare Formenteil 30 vom stationären Formenteil 40 getrennt.

Der Vorspritzling 60 wird darauf im bewegbaren Formenteil 30 zur Kühlstation K.1 bewegt, wo er, ohne einen stationären Formenteil oder sonst ein Werkzeug auf der stationären Seite, während einer Taktzeit auskühlt. Dann wird er in die zweite Spritzstation S.2 bewegt, wo zwischen einem zweiten stationären Formenteil 50 mit einem Hauptteil 51, in dem sich eine zweite Spritzdüse 52 befindet, und mit zwei Schiebern 53 und 54 und dem Vorspritzling 60 ein zweiter Hohlraum gebildet wird. Dieser Hohlraum wird noch erweitert durch eine Relativbewegung zwischen Zentralteil 31 und Peripherieteilen 32 und 33 des bewegbaren Formenteiles 30. Die weiteren Vorgänge (Spritzen und Öffnen) in dieser Station, in der durch Umgiessen des Vorspritzlings 60 mit dem zweiten Material M.2 der fertige Spritzling 70 entsteht, entsprechen den Bewegungen in der ersten Spritzstation.

Der fertige Spritzling 70 wird dann im bewegbaren Formenteil 30 in die Ausstossstation bewegt und dort durch die Ausstossmittel 34 ausgestossen.

Es ist wegen des Aufwandes für die Werkzeuge vorteilhaft, die Spritzform, wenn möglich, derart zu gestalten, dass nur an den stationären Formenteilen Schieber notwendig sind, denn von den stationären Formenteilen sind nur soviele notwendig, wie Spritzlinge effektiv simultan hergestellt werden (Anzahl Spritzlinge in einem Formnest).

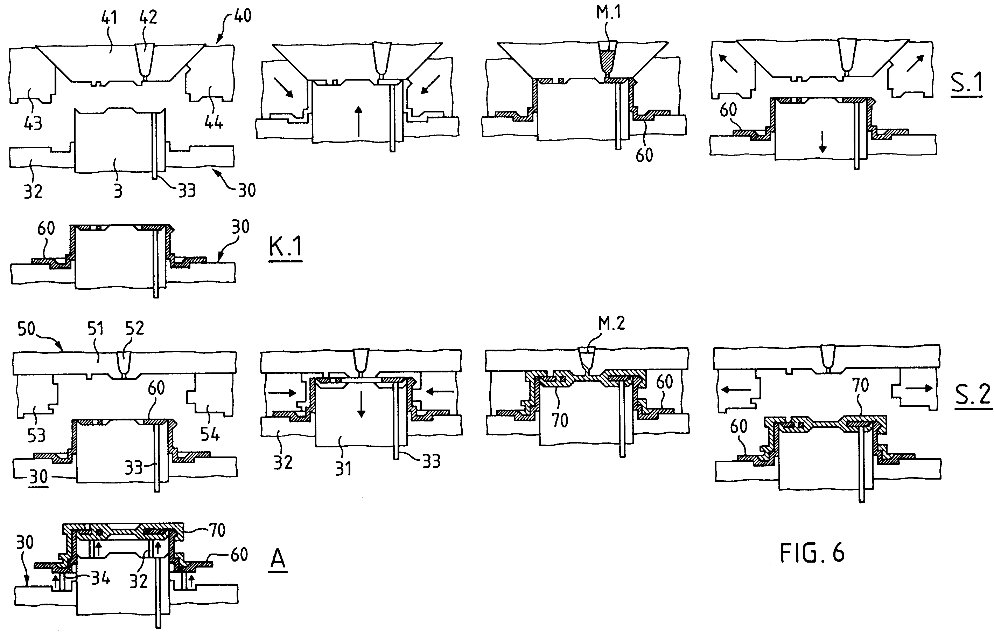

Es ist aus demselben Grunde vorteilhaft, die Spritzdüsen, wie in den Figuren 5 und 6 dargestellt, stationär anzuordnen, es ist aber nicht zwingend. Es sind Anordnungen denkbar, in denen sich die Spritzdüsen relativ zu stationären Spritzformenteilen bewegen. Es ist ebenfalls vorteilhaft, zum Öffnen und Schliessen der Spritzformen den Drehtisch zu bewegen, aber auch hier sind Ausführungsformen denkbar, in denen die Düsenseite oder beide Seiten zum Öffnen und Schliessen der Formen bewegt werden.

Es ist ebenfalls vorteilhaft, die gleiche Anzahl von bewegbaren Formenteilen (oder Formenteilnester) vorzusehen, wie Stationen auf dem stationären Werkzeug vorgesehen sind, und die bewegbaren Formenteile und die Stationen in regelmässigen Abständen auf je einer gleichen, in sich geschlossenen Linie, beispielsweise auf einer Kreislinie anzuordnen, wie dies bei Verwendung eines Drehtisches der Fall ist. Aber auch diese Anordnung ist nicht zwingend. Die Stationen können auch auf einer nicht geschlossenen Linie angeordnet sein und die leeren bewegbaren Formenteile nach dem Ausstossen des Spritzlings auf irgend eine Art und Weise an den Anfang der Linie zurückbewegt werden.

## Patentansprüche

1. Spritzgussverfahren, mit dem aus n spritzgiessbaren Materialien oder Materialiengruppen in n Spritzschritten in einer Spritzform bzw. einem Formnest Spritzlinge bzw. Spritzlinggruppen hergestellt werden, wobei n eine ganze Zahl und grösser als Null ist und wobei die n Spritzschritte im wesentlichen simultan in n Spritzstationen ausgeführt werden und die entstehenden Spritzlinge relativ zu den Spritzstationen getaktet bewegt werden, **dadurch gekennzeichnet**, dass zusätzlich zu den n Spritzstationen für n Spritzschritte (S.1, S.2) mindestens eine weitere Station für mindestens einen weiteren Schritt (K.1, A) vorgesehen ist und dass alle mindestens n + 1 Stationen auf einer Linie angeordnet sind, entlang welcher Linie die entstehenden Spritzlinge sich von einer Station zur anderen bewegen.

2. Spritzgussverfahren nach Anspruch 1, **dadurch gekennzeichnet**, dass der mindestens eine weitere Schritt (A) das Ausstossen in einer Ausstossstation ist, bei dem simultan zu den Spritzschritten (S.1, S.2) der fertige Spritzling bzw. die fertige Spritzlinggruppe aus der Spritzform bzw. dem Formnest ausgestossen wird.

3. Spritzgussverfahren nach einem der Ansprüche 1 oder 2, **dadurch gekennzeichnet**, dass der mindestens eine weitere Schritt (K.1) ein Kühlen des entstehenden Spritzlings oder des fertigen Spritzlings in einer Abkühlstation ist.

4. Spritzgussverfahren nach einem der Ansprüche 1 bis 3, **dadurch gekennzeichnet**, dass der mindestens eine weitere Schritt ein Besprühen des entstehenden oder des fertigen Spritzlings ist.

5. Spritzgussverfahren nach einem der Ansprüche 1 bis 4, **dadurch gekennzeichnet**, dass der mindestens eine weitere Schritt ein Deformieren mindestens eines Teiles des entstehenden oder des fertigen Spritzlings ist.

6. Spritzgussverfahren nach einem der Ansprüche 1 bis 5, **dadurch gekennzeichnet**, dass der mindestens eine weitere Schritt eine mechanische Behandlung zur Strukturveränderung des gespritzten Materials des entstehenden oder des fertigen Spritzlings oder eines Bereiches davon ist.

7. Spritzgussverfahren nach einem der Ansprüche 1 bis 6, **dadurch gekennzeichnet**, dass die Linie, auf der die mindestens n + 1 Stationen angeordnet sind und auf der die entstehenden Spritzlinge relativ zu den Stationen bewegt werden, eine Kreislinie ist.

8. Spritzgussverfahren nach einem der Ansprüche 1 bis 7, **dadurch gekennzeichnet**, dass die entstehenden Spritzlinge zusammen mit einem Teil der Spritzform bewegt werden.

9. Spritzgussverfahren nach Anspruch 8, **dadurch gekennzeichnet**, dass der Teil der Spritzform, in dem der entstehende Spritzling bewegt wird, durch verschiebbare Teile veränderbar und/oder der Spritzling darin bewegbar ist.

10. Vorrichtung zur Durchführung des Spritzgussverfahrens nach einem der Ansprüche 1 bis 9, welche Vorrichtung eine Anordnung von n Spritzstationen mit je mindestens einer Spritzdüse und Mittel für eine getaktete Relativbewegung von entstehenden Spritzlingen relativ zu den Spritzstationen aufweist, **dadurch gekennzeichnet**, dass die Vorrichtung zusätzlich zu den n Spritzstationen mindestens eine weitere Station aufweist, dass alle mindestens n + 1 Stationen auf einer Linie angeordnet sind und dass die Vorrichtung mindestens n + 1 Spritzformen oder Formnester oder mindestens Teile von Spritzformen oder Formnestern aufweist, die im wesentlichen entlang dieser Linie getaktet bewegbar sind.

11. Vorrichtung nach Anspruch 10, **dadurch gekennzeichnet**, dass zum Öffnen und Schliessen der Spritzformen oder Formnester mindestens Teile davon auch quer zur genannten Linie bewegbar sind.

12. Vorrichtung nach Anspruch 10 oder 11, **dadurch gekennzeichnet**, dass die bewegbaren mindestens n + 1 Spritzformen, Formnester oder Teile davon auf einem Drehtisch um einen Winkel von 360°/n + x voneinander beabstandet angeordnet sind und dass der Drehtisch taktweise um einen Winkel von 360°/n+x drehbar ist, wobei x eine ganze Zahl und grösser als Null ist.

13. Vorrichtung nach einem der Ansprüche 10 bis 12, **dadurch gekennzeichnet**, dass die Spritzformen oder Formnester aus je einem bewegbaren (30) und einem stationären Formenteil (40, 50) bestehen und dass in jeder Spritzstation stationäre Formenteile vorgesehen sind.

14. Vorrichtung nach Anspruch 13, **dadurch gekennzeichnet**, dass die stationären Formenteile (40, 50) Schieber (43, 44, 53, 54) aufweisen.

15. Vorrichtung nach einem der Ansprüche 10 bis 14, **dadurch gekennzeichnet**, dass die bewegbaren Formenteile (30) zu deren Veränderung von Vorspritzform zu Spritzform gegeneinander bewegbare Teile (31, 32, 33) aufweisen.

16. Vorrichtung nach einem der Ansprüche 10 bis 15, **dadurch gekennzeichnet** dass die bewegbaren Formenteile (30) Ausstossmittel (34) aufweisen.

17. Vorrichtung nach einem der Ansprüche 10 bis 16, **dadurch gekennzeichnet**, dass die Spritzstationen zusammen mit den weiteren Stationen auf einem stationären Werkzeug 20 angeordnet sind, wobei auf dem Werkzeug (20) für die Spritzstationen Spritzdüsen und stationäre Formenteile (40, 50), für die weiteren Stationen Lücken (23, 24) oder Werkzeuge vorgesehen sind.

18. Vorrichtung nach Anspruch 17, **dadurch gekennzeichnet**, dass für eine Ausstossstation ein oder mehrere Ausstoss- oder Absaugkanäle vorgesehen sind.
